# EUROPÄISCHE PATENTSCHRIFT

(11) **EP 2 639 800 B1**
(45) Veröffentlichungstag und Bekanntmachung des Hinweises auf die Patenterteilung: **15.10.2014**
(21) Anmeldenummer: 12159359.4
(22) Anmeldetag: 14.03.2012
(51) Int. Cl.: H01F 27/38

(54) **Transformator für ein elektrisch angetriebenes Fahrzeug**
Transformer for an electric vehicle
Transformateur pour un véhicule entraîné électriquement

(43) Veröffentlichungstag der Anmeldung: 18.09.2013
(73) Patentinhaber: Siemens Aktiengesellschaft, 80333 München (DE)
(72) Erfinder: Amon, Michael, Dr., 90556 Cadolzburg (DE); Baumann, Markus, 90762 Fürth (DE); Beck, Reinhold, 91578 Leutershausen (DE); Hörmann, Daniel, 90489 Nürnberg (DE); Kirchenmayer, Egon, 90453 Nürnberg (DE); Silbernagel, Andre, 90491 Nürnberg (DE); Zehner, Ingo Gerd, 90513 Zirndorf (DE)

(56) Entgegenhaltungen:
- EP-A2- 0 932 168
- WO-A1-2008/151661
- WO-A1-2009/132675

## Beschreibung

Die Erfindung betrifft einen Transformator für ein elektrisch angetriebenes Fahrzeug mit mindestens einer Oberspannungsprimärwicklung, mindestens einer Traktionssekundärwicklung sowie mindestens einer Hilfsbetriebesekundärwicklung und einem magnetisch leitfähigen Kern.

Ein Transformator für ein elektrisch angetriebenes Fahrzeug wandelt eine von einem Fahrleitungsdraht gelieferte elektrische Spannung, im Folgenden als Oberspannung bezeichnet, in eine zum Betrieb der elektrischen Antriebsmaschine geeignete Traktionsspannung sowie in eine zur Versorgung von Nebenaggregaten wie Heizung, Beleuchtung oder Lüfter geeignete Hilfsbetriebespannung um. Zu diesem Zweck ist eine mit der Oberspannung gespeiste Oberspannungsprimärwicklung induktiv mit einer Traktionssekundärwicklung sowie mit einer Hilfsbetriebesekundärwicklung gekoppelt, welche die Traktionsspannung beziehungsweise die Hilfsbetriebespannung bereitstellen.

Aus dem Stand der Technik sind Wicklungsanordnungen bekannt, die die induktive Kopplung zwischen der Oberspannungsprimärwicklung einerseits und der Traktionssekundärwicklung sowie der Hilfsbetriebesekundärwicklung andererseits bewirken. Hierbei sind mehrere fortlaufende Windungen eines elektrisch leitfähigen Drahts, im Folgenden als Spule bezeichnet, um einen gemeinsamen Eisenkern mit länglicher Ausdehnung angeordnet.

In einer als Scheibenwicklung bezeichneten Wicklungsanordnung sind mehrere Spulen elektrisch in Reihe geschaltet und bilden zusammen eine Wicklung, beispielsweise eine Traktionssekundärwicklung. Mehrere Spulen sind in einer axialen Richtung entlang der länglichen Ausdehnung des gemeinsamen Eisenkerns nebeneinander angeordnet, wobei Spulen verschiedener Wicklungen aufeinander folgen. Beispielsweise beschreibt DD 234 108 A1 eine Scheibenspulenanordnung für Fahrzeugtransformatoren mit mehreren Traktionssystemen, bei welcher durch geeignete Anordnung der Spulen zur vorgegebenen Lage der Durchführungen Kreuzungen in der Führung der Verbindungsleitungen vermieden werden.

Ferner sind aus dem Stand der Technik, beispielsweise aus R. Küchler, Die Transformatoren: Grundlagen für ihre Berechnung und Konstruktion, Springer 1966, S. 282f, als Röhren- oder Zylinderwicklung bezeichneten Wickelanordnungen bekannt, bei denen die Oberspannungsprimärwicklung, die Traktionssekundärwicklung sowie die Hilfsbetriebesekundärwicklung aus jeweils einer Spule bestehen, wobei diese Spulen konzentrisch angeordnet sind. Aus dem Stand der Technik bekannte Lösungen sehen beispielsweise eine Anordnung der Traktionssekundärwicklung auf einer innersten Lage um den gemeinsamen Eisenkern vor. Auf diese innerste Lage wird die Oberspannungsprimärwicklung aufgetragen. Auf einer äußersten Lage wird um die Oberspannungsprimärwicklung herum die Hilfsbetriebesekundärwicklung aufgetragen.

Der Erfindung liegt die Aufgabe zugrunde, einen verbesserten Transformator für ein elektrisch angetriebenes Fahrzeug anzugeben, der mindestens eine Oberspannungsprimärwicklung, mindestens eine Traktionssekundärwicklung sowie mindestens eine Hilfsbetriebesekundärwicklung und einen magnetisch leitfähigen Kern umfasst.

Die Aufgabe wird erfindungsgemäß durch die im Anspruch 1 angegebenen Merkmale gelöst.

Vorteilhafte Ausgestaltungen der Erfindung sind Gegenstand der Unteransprüche.

Bei einem Transformator für ein elektrisch angetriebenes Fahrzeug mit mindestens einer Oberspannungsprimärwicklung, mindestens einer Traktionssekundärwicklung sowie mindestens einer Hilfsbetriebesekundärwicklung und einem magnetisch leitfähigen Kernschenkel, ist erfindungsgemäß eine Traktionssekundärwicklung in einer inneren Schicht konzentrisch um den Kernschenkel angeordnet und eine Oberspannungsprimärwicklung und eine Hilfsbetriebesekundärwicklung in einer äußeren Schicht konzentrisch um den Kernschenkel und die Traktionssekundärwicklung angeordnet, wobei die Hilfsbetriebesekundärwicklung zwei elektrisch verbundene Spulen umfasst, welche die Oberspannungsprimärwicklung in axialer Richtung einschließen.

Der Transformator der beschriebenen, erfindungsgemäßen Bauform umfasst mindestens vier Spulen, zwischen denen eine induktive Kopplung bewirkt wird.

Hierbei bildet eine innere Spule die Traktionssekundärwicklung. Konzentrisch um diese innere Spule ist eine erste äußere Spule so angeordnet, dass die Mittelpunkte der inneren und der ersten äußeren Spule in axialer Richtung näherungsweise übereinander liegen. Diese erste äußere Spule bildet die Oberspannungsprimärwicklung, wobei die Ausdehnung dieser ersten äußeren Spule in axialer Richtung geringer ist als die Ausdehnung der inneren Spule.

Konzentrisch um die innere Spule sind eine zweite und eine dritte äußere Spule so angeordnet, dass sie in axialer Richtung die erste äußere Spule der Oberspannungsprimärwicklung einschließen. Diese zweite und dritte äußere Spule sind elektrisch in Reihe geschaltet und bilden gemeinsam die Hilfsbetriebesekundärwicklung. In axialer Richtung überdecken die nebeneinander angeordneten äußeren Spulen der Oberspannungsprimärwicklung und der Hilfsbetriebesekundärwicklung die innere Spule der Traktionssekundärwicklung näherungsweise vollständig. Diese Anordnung von einer inneren und insgesamt drei äußeren Spulen wird im Folgenden als konzentrische Spulenanordnung bezeichnet.

Im Inneren der konzentrischen Spulenanordnung befindet sich ein Kern mit länglicher Ausdehnung entlang der axialen Richtung aus magnetisch gut leitfähigem Material

Die konzentrische Anordnung der Spulen bewirkt, dass ein Großteil des von der Oberspannungsprimärwicklung erzeugten magnetischen Flusses auch die Traktionssekundärwicklung durchfließt. In vorteilhafter Weise wird damit eine besonders hohe induktive Kopplung zwischen der Oberspannungsprimärwicklung und der Traktionssekundärwicklung erzielt.

Dies bewirkt eine besonders große Effizienz der Energieübertragung in der Transformation der Oberspannung in die Traktionssekundärspannung. Dies ist besonders vorteilhaft, da der Anteil der in die Traktionssekundärspannung transformierten Energie im Vergleich zur Hilfsbetriebespannung sehr groß ist.

Durch die Anordnung der Hilfsbetriebesekundärwicklung seitlich von der Oberspannungsprimärwicklung in der Art einer Scheibenwicklung, durchfließt der seitlich aus der Oberspannungsprimärwicklung austretende magnetische Streufluss die Hilfsbetriebesekundärwicklung. Damit wird eine induktive Kopplung bewirkt, die im Allgemeinen zwar geringer ist als die Kopplung zwischen der Oberspannungsprimärwicklung und der Traktionssekundärwicklung, die aber zur Übertragung des im Vergleich zur Traktionsspannung geringen Energieanteils auf die Hilfsbetriebespannung ausreicht.

In vorteilhafter Weise wird durch diese seitliche Anordnung der Hilfsbetriebesekundärwicklung der Verlustanteil des magnetischen Streuflusses verringert, der ungenutzt aus der Oberspannungsprimärwicklung austritt. Damit werden Energieverluste bei der Transformation im Vergleich zu einer aus dem Stand der Technik bekannten Scheibenwicklung verringert.

Es ist ein weiterer wesentlicher Vorteil der Erfindung, dass dadurch auch das Eindringen von magnetischem Streufluss in umgebende Bauteile, beispielsweise in einen den Transformator umgebenden Kessel, verringert wird. Damit nimmt die thermische Belastung der umgebenden Bauteile ab. Dies erlaubt eine kostengünstigere Konstruktion des Transformators, da einfachere oder geringer dimensionierte Entwärmevorrichtungen eingesetzt werden können als bei einer aus dem Stand der Technik bekannten Scheibenwicklung.

Der Anteil des magnetischen Streuflusses der Oberspannungsprimärwicklung, der die Hilfsbetriebesekundärwicklung durchfließt, ist in der vorgeschlagenen Anordnung größer als bei einer aus dem Stand der Technik bekannten Röhrenwicklung mit außen aufgebrachter Hilfsbetriebesekundärwicklung. Dadurch ist es in vorteilhafter Weise möglich, auf zusätzliche konstruktive Maßnahmen zur Erhöhung der Induktivität, beispielsweise durch Schaltung mindestens einer Drossel in Reihe zur Hilfsbetriebesekundärwicklung, zu verzichten oder diese Maßnahmen zu begrenzen. Dies verringert die Herstellungskosten und ermöglicht eine platzsparendere Bauweise des Transformators.

Die Erfindung verbindet somit den hohen Wirkungsgrad bei der Energieübertragung zwischen Oberspannungsprimärwicklung und Traktionssekundärwicklung als Vorteil der Röhrenwicklung mit geringen Verlusten durch magnetischen Streufluss sowie einer ausreichenden induktiven Kopplung zwischen Oberspannungsprimärwicklung und Hilfsbetriebesekundärwicklung als Vorteil der Scheibenwicklung.

In einer weiteren Ausführungsform der Erfindung umfasst erfindungsgemäß die Oberspannungsprimärwicklung mindestens zwei elektrisch verbundene Spulen und die Hilfsbetriebesekundärwicklung mindestens vier elektrisch verbundene Spulen, wobei in axialer Richtung zwischen zwei Spulen der Hilfsbetriebesekundärwicklung jeweils eine Spule der Oberspannungsprimärwicklung angeordnet ist.

Ein besonderer Vorteil dieser Ausführungsform der Erfindung ist die verbesserte induktive Kopplung zwischen der Oberspannungsprimärwicklung, die nun mindestens zwei äußere Spulen umfasst, und der Hilfsbetriebesekundärwicklung, die nun mindestens drei äußere Spulen umfasst. Durch die Anordnung der zusätzlichen mindestens einen Spule der Hilfsbetriebesekundärwicklung jeweils zwischen zwei Spulen der Oberspannungsprimärwicklung wird ein größerer Anteil des magnetischen Flusses durch die Hilfsbetriebesekundärwicklung geleitet.

Dadurch ist es in vorteilhafter Weise möglich, auch bei größeren Lasten in dem von der Hilfsbetriebesekundärwicklung gespeisten Stromkreis auf zusätzliche konstruktive Maßnahmen zur Erhöhung der Induktivität, beispielsweise durch Schaltung einer oder mehrerer Drosseln in Reihe zur Hilfsbetriebesekundärwicklung, zu verzichten oder diese Maßnahmen zu begrenzen. Dies verringert die Herstellungskosten und ermöglicht eine platzsparendere Bauweise des Transformators.

In einer weiteren Ausführungsform sind erfindungsgemäß jeweils mindestens zwei Spulen der Traktionssekundärwicklung, mindestens zwei Spulen der Oberspannungsprimärwicklung und mindestens vier Spulen der Hilfsbetriebesekundärwicklung in axialer Richtung nebeneinander angeordnet.

Bei dieser Ausführungsform der Erfindung sind mindestens zwei konzentrische Spulenanordnungen in axialer Richtung nebeneinander um einen gemeinsamen Kern aus magnetisch leitfähigem Material angeordnet. Dabei stoßen jeweils zwei Spulen der Hilfsbetriebesekundärwicklungen an den einander zugewandten Enden der jeweiligen konzentrischen Spulenanordnungen an einander.

In vorteilhafter Weise wird durch die in axialer Richtung wechselweise Anordnung von Spulen der Oberspannungsprimärwicklung und Spulen der Hilfsbetriebesekundärwicklung der Anteil des magnetischen Flusses in der Hilfsbetriebesekundärwicklung erhöht. Dadurch ist es in vorteilhafter Weise möglich, auch bei größeren Lasten im Hilfsbetriebesekundärkreis auf zusätzliche konstruktive Maßnahmen zur Erhöhung der Induktivität, beispielsweise durch Schaltung einer oder mehrerer Drosseln in Reihe zur Hilfsbetriebesekundärwicklung, zu verzichten oder diese Maßnahmen zu begrenzen. Dies verringert die Herstellungskosten und ermöglicht eine platzsparendere Bauweise des Transformators.

Ein weiterer Vorteil dieser Ausführungsform der Erfindung mit mindestens zwei parallel betriebenen Traktionssekundärwicklungen ist der verringerte konstruktive Aufwand, da bei näherungsweise gleichbleibendem oder geringfügig erhöhtem Aufwand die Wicklungen so betrieben werden können, dass die Netzrückwirkungen minimiert werden.

Beispielsweise ist es möglich, mittels zweier parallel betriebener Traktionssekundärwicklungen, die von zwei ebenfalls parallel betriebenen Oberspannungsprimärwicklungen induktiv erregt werden, zwei Antriebsmaschinen versorgt werden.

Dabei können wesentliche Bauteile wie ein Joch zur Führung des magnetischen Flusses beibehalten werden. Dies erlaubt eine kostengünstigere und platzsparendere Bauweise des Transformators.

In einer weiteren Ausführungsform wird erfindungsgemäß mindestens eine Drosselspule in Reihe zu mindestens einer Spule einer Hilfsbetriebesekundärwicklung geschaltet.

Diese Ausführungsform der Erfindung bietet den Vorteil, dass bei unzureichender magnetischer Kopplung zwischen der Oberspannungsprimärwicklung und der Hilfsbetriebesekundärwicklung die Gesamtinduktivität der Reihenschaltung aus der Hilfsbetriebesekundärwicklung und der Drosselspule vergrößert wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- FIG 1: eine Scheibenwicklungsanordnung nach dem Stand der Technik in geschnittener Darstellung,
- FIG 2: eine Röhrenwicklungsanordnung nach dem Stand der Technik in geschnittener Darstellung,
- FIG 3: eine Kombination aus einer Röhrenwicklungsanordnung und einer Scheibenwicklungsanordnung mit einer einspuligen Oberspannungsprimärwicklung in geschnittener Darstellung, als Ausführungsbeispiel der Erfindung, ebenso
- FIG 4: eine Kombination aus einer Röhrenwicklungsanordnung und einer Scheibenwicklungsanordnung mit einer zweispuligen Oberspannungsprimärwicklung in geschnittener Darstellung und
- FIG 5: eine Kombination aus einer Röhrenwicklungsanordnung und einer Scheibenwicklungsanordnung mit einer zweispuligen Traktionssekundärwicklung in geschnittener Darstellung.

Einander entsprechende Teile sind in allen Figuren mit den gleichen Bezugszeichen versehen.

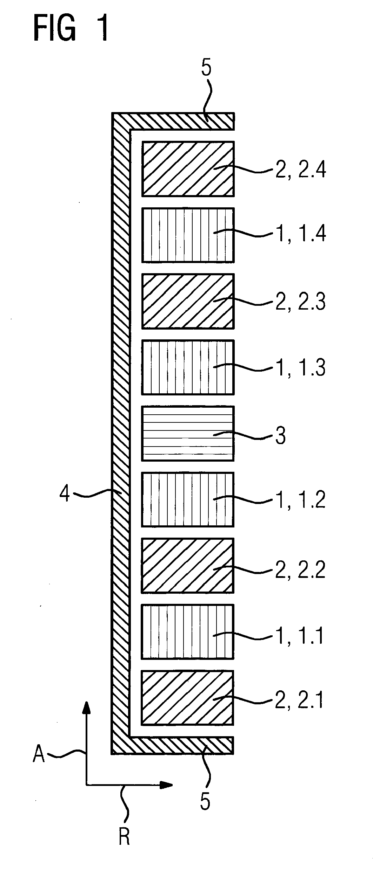

Figur 1 zeigt eine aus dem Stand der Technik als Scheibenwicklung bekannte Wicklungsanordnung. Die Oberspannungsprimärwicklung 1, die Traktionssekundärwicklung 2 und die Hilfsbetriebesekundärwicklung 3 bestehen aus jeweils mehreren Spulen 1.1 bis 1.4, 2.1 bis 2.4 und 3.1 um den Kernschenkel 4. Mehrere in einer radialen Richtung R nebeneinander liegende Kernschenkel 4 können über ein Joch 5 magnetisch verbunden sein.

Die Spulen einer Wicklung können elektrisch in Reihe oder parallel geschaltet sein. Die Spulen sind entlang der axialen Richtung A so angeordnet, dass eine Spule 1.1 bis 1.4 der Oberspannungsprimärwicklung 1 jeweils beidseitig von Spulen 2.1 bis 2.4, 3.1 der Traktionssekundärwicklung 2 und/oder der Hilfsbetriebesekundärwicklung 3 eingeschlossen ist. Hierbei ist die Spule 3.1 mittig entlang der axialen Richtung A angeordnet.

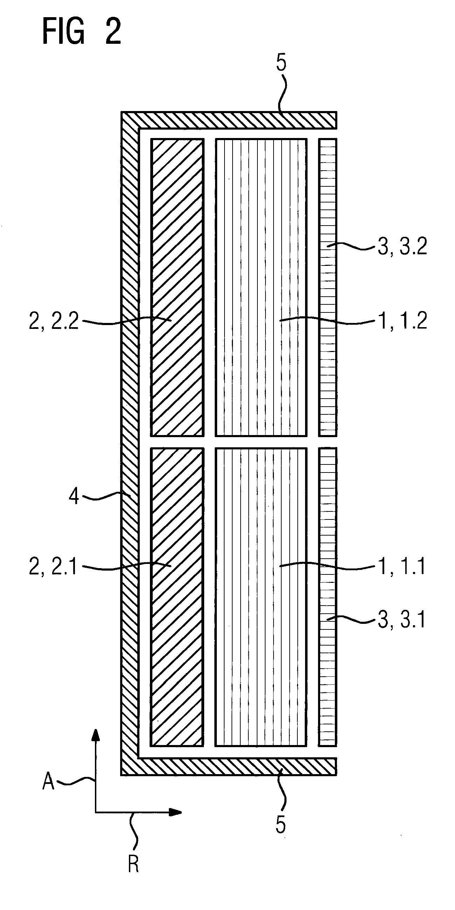

Figur 2 zeigt eine aus dem Stand der Technik als Röhrenwicklung oder Zylinderwicklung bekannte Wicklungsanordnung. Die Oberspannungsprimärwicklung 1, die Traktionssekundärwicklung 2 und die Hilfsbetriebesekundärwicklung 3 bestehen aus jeweils zwei Spulen 1.1, 1.2, 2.1, 2.2 und 3.1, 3.2, die die gleiche Ausdehnung in axialer Richtung A aufweisen. Die Spule 2.1 der Traktionssekundärwicklung 2 ist um den Kernschenkel 4 gewickelt. Hierum sind in radialer Richtung R vom Kernschenkel 4 wegführend die Spule 1.1 der Oberspannungsprimärwicklung 1 sowie die Spule 3.1 der Hilfsbetriebesekundärwicklung 3 konzentrisch angeordnet.

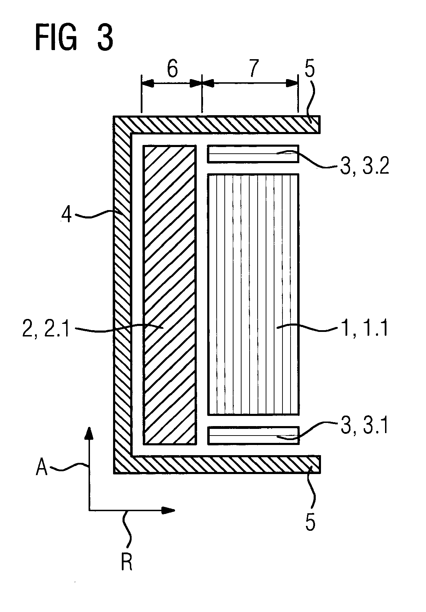

Figur 3 zeigt als ein bevorzugtes Ausführungsbeispiel der Erfindung eine Kombination aus einer Röhrenwicklungsanordnung und einer Scheibenwicklungsanordnung. Hierbei besteht eine Traktionssekundärwicklung 2 aus einer einzigen Spule 2.1, die in einer inneren Schicht 6 konzentrisch um einen Kernschenkel 4 aus magnetisch gut leitfähigem Material gewickelt ist.

Konzentrisch um die Spule 2.1 der Traktionssekundärwicklung 2 ist eine Spule 1.1 einer Oberspannungsprimärwicklung 1 so angeordnet, dass die Mittelpunkte beider Spulen in axialer Richtung A näherungsweise übereinander liegen. Hierbei ist die Ausdehnung der Spule 1.1 der Oberspannungsprimärwicklung 1 in axialer Richtung A geringer als die Ausdehnung der Spule 2.1 der Traktionssekundärwicklung 2.

Konzentrisch um die Spule 2.1 der Traktionssekundärwicklung 2 sind ferner eine erste Spule 3.1 und eine zweite Spule 3.2 einer Hilfsbetriebesekundärwicklung 3 so angeordnet, dass sie die Spule 1.1 der Oberspannungsprimärwicklung 1 in axialer Richtung A einschließen. Die erste Spule 3.1 und die zweite Spule 3.2 der Hilfsbetriebesekundärwicklung 3 sind dabei elektrisch in Reihe geschaltet.

In einer bevorzugten Variante dieser Ausführungsform schließen die Spulen 3.1, 3.2 der Hilfsbetriebesekundärwicklung 3 in axialer Richtung A mit der Spule 2.1 der Traktionssekundärwicklung 2 ab.

Der von der Oberspannungsprimärwicklung 1 erzeugte magnetische Fluss verläuft vorwiegend in dem von der Spule 1.1 umschlossenen Zylinder. Der magnetische Fluss reicht hierbei in axialer Richtung A über die Grenzen der Spule 1.1 hinaus.

Damit wird eine starke induktive Kopplung von der Oberspannungsprimärwicklung 1 auf die Traktionssekundärwicklung 2 bewirkt, deren Spule 2.1 sich nahezu vollständig in dem von der Spule 1.1 umschlossenen Zylinder befindet.

Ferner wird damit eine Abschirmung des magnetischen Streuflusses bewirkt, der in axialer Richtung A über die Spule 1.1 hinausreicht. Dieser magnetische Streufluss wird im Wesentlichen von den Spulen 3.1, 3.2 der Hilfsbetriebesekundärwicklung 3 aufgenommen.

In vorteilhafter Weise wird dadurch zum einen dieser magnetische Streufluss zur Induktion einer Hilfsbetriebespannung verwendet. Zum anderen werden Energieverluste des Transformators und thermische Beanspruchungen umgebender Bauteile durch austretenden magnetischen Streufluss vermindert.

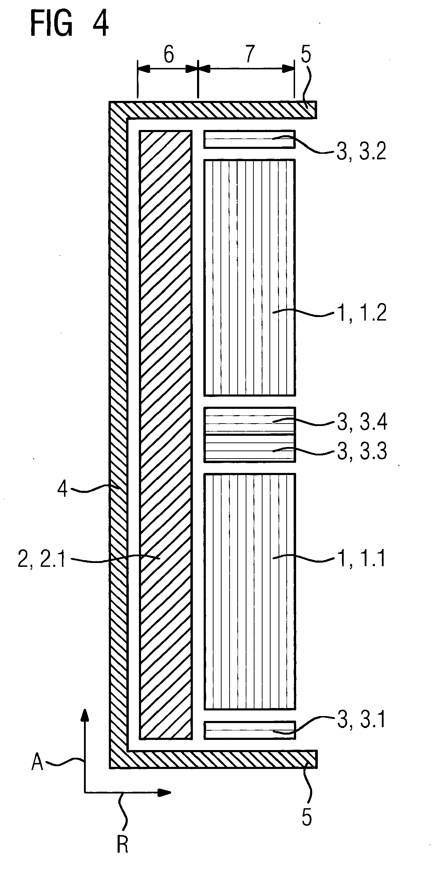

Ein weiteres bevorzugtes Ausführungsbeispiel der Erfindung ist in Figur 4 dargestellt. Analog zu dem in Figur 3 gezeigten Ausführungsbeispiel ist die aus einer einzigen Spule 2.1 bestehende Traktionssekundärwicklung 2 in einer inneren Schicht 6 der konzentrischen Spulenanordnung um den Kernschenkel 4 angeordnet.

Konzentrisch hierzu sind in einer äußeren Schicht 7 die Spulen 1.1, 1.2 und 3.1, 3.2, 3.3, 3.4 der Oberspannungsprimärwicklung 1 beziehungsweise der Hilfsbetriebesekundärwicklung 3 angeordnet. In axialer Richtung A liegen dabei eine dritte Spule 3.3 und eine vierte Spule 3.4 der Hilfsbetriebesekundärwicklung 3 näherungsweise mittig zur Spule 2.1 der Traktionssekundärwicklung 2 in der inneren Schicht 6.

In axialer Richtung A wird die äußere Schicht 7 der Spulenanordnung von einer ersten Spule 3.1 und einer zweiten Spule 3.2 der Hilfsbetriebesekundärwicklung 3 begrenzt. Zwischen den Spulen 3.1 und 3.3 sowie 3.4 und 3.2 der Hilfsbetriebesekundärwicklung 3 ist jeweils eine Spule 1.1 beziehungsweise eine Spule 1.2 der Oberspannungsprimärwicklung 1 angeordnet.

Zusätzlich zu den Vorteilen des in Figur 3 beschriebenen Ausführungsbeispiels wird durch die Anordnung der zusätzlichen Spulen 3.3, 3.4 zwischen die Spulen 1.1, 1.2 ein größerer Teil des magnetischen Flusses der Oberspannungsprimärwicklung 1 in die Hilfsbetriebesekundärwicklung 3 geführt. Damit wird, analog zu dem in Figur 1 beschriebenen Prinzip der Scheibenwicklungsanordnung, die induktive Energieübertragung von der Oberspannungsprimärwicklung 1 nach der Hilfsbetriebesekundärwicklung 3 verbessert.

In vorteilhafter Weise gestattet dieses Ausführungsbeispiel der Erfindung dadurch die Versorgung einer höheren Verbrauchslast in dem von der Hilfsbetriebesekundärwicklung 3 gespeisten Stromkreis.

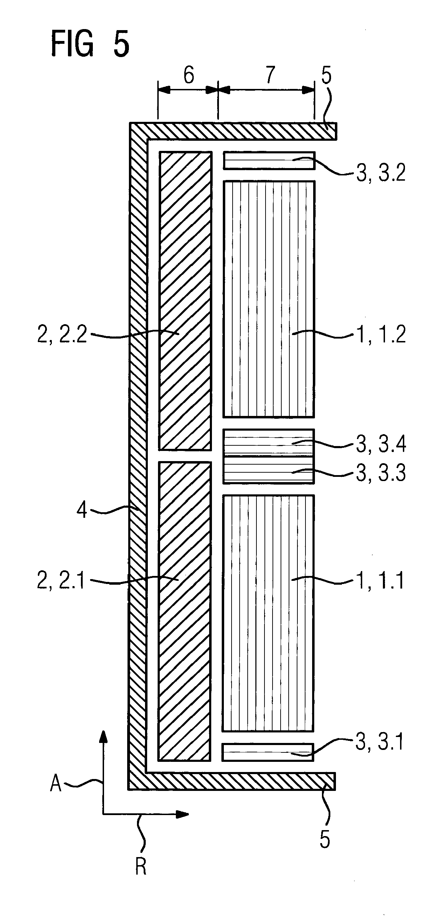

Eine weitere, besonders vorteilhafte Variante dieses Ausführungsbeispiels ist in Figur 5 dargestellt. Hierbei ist die Traktionssekundärwicklung 2 aus zwei Spulen 2.1, 2.2 aufgebaut, die konzentrisch zu den Spulen 1.1, 1.2 der Oberspannungsprimärwicklung 1 angeordnet sind. Dabei liegt in axialer Richtung A die Spule 2.1 näherungsweise mittig zur Spule 1.1 und die Spule 2.2 näherungsweise mittig zur Spule 1.2.

In vorteilhafter Weise können die Spulen 1.1 und 1.2 der Oberspannungsprimärwicklung 1 parallel betrieben werden und jeweils eine Spule 2.1 und eine Spule 2.2 der Traktionssekundärwicklung 2 induktiv erregen, welche ebenfalls parallel betrieben werden. Dadurch ist es möglich, zwei elektrische Antriebsmaschinen unabhängig voneinander durch jeweils eine der Spulen 2.1, 2.2 der Traktionssekundärwicklung 2 zu versorgen.

Obwohl die Erfindung im Detail durch ein bevorzugtes Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Transformator für ein elektrisch angetriebenes Fahrzeug mit mindestens einer Oberspannungsprimärwicklung (1), mindestens einer Traktionssekundärwicklung (2) sowie mindestens einer Hilfsbetriebesekundärwicklung (3) und einem magnetisch leitfähigen Kernschenkel (4), wobei
- eine Traktionssekundärwicklung (2) in einer inneren Schicht (6) konzentrisch um den Kernschenkel (4) angeordnet ist und
- eine Oberspannungsprimärwicklung (1) und eine Hilfsbetriebesekundärwicklung (3) in einer äußeren Schicht (7) konzentrisch um den Kernschenkel (4) und die Traktionssekundärwicklung (2) angeordnet sind, **dadurch gekennzeichnet, dass**
- die Hilfsbetriebesekundärwicklung (3) zwei elektrisch verbundene Spulen (3.1, 3.2, 3.3, 3.4) umfasst, welche die Oberspannungsprimärwicklung (1) in axialer Richtung (A) einschließen.

2. Transformator nach Anspruch 1, wobei
- die Oberspannungsprimärwicklung (1) mindestens zwei elektrisch verbundene Spulen (1.1, 1.2) umfasst und
- die Hilfsbetriebesekundärwicklung (3) mindestens vier elektrisch verbundene Spulen (3.1, 3.2, 3.3, 3.4) umfasst, wobei
- in axialer Richtung A zwischen je zwei Spulen (3.1 und 3.3 sowie 3.4 und 3.2) der Hilfsbetriebesekundärwicklung (3) je eine Spule (1.1, 1.2) der Oberspannungsprimärwicklung (1) angeordnet ist.

3. Transformator nach einem der vorhergehenden Ansprüche, wobei jeweils mindestens zwei Spulen (2.1, 2.2) der Traktionssekundärwicklung (2), mindestens zwei Spulen (1.1, 1.2) der Oberspannungsprimärwicklung (1) und mindestens vier Spulen (3.1, 3.2, 3.3, 3.4) der Hilfsbetriebesekundärwicklung (3) in axialer Richtung (A) nebeneinander angeordnet sind.

4. Transformator nach einem der vorhergehenden Ansprüche, wobei mindestens eine Drosselspule in Reihe zu mindestens einer Spule (3.1, 3.2, 3.3, 3.4) einer Hilfsbetriebesekundärwicklung (3) geschaltet wird.

## Claims

1. Transformer for an electrically driven vehicle comprising at least one high-voltage primary winding (1), at least one traction secondary winding (2) and at least one auxiliary operation secondary winding (3) and a magnetically conductive core limb (4), wherein
- a traction secondary winding (2) is arranged in an inner layer (6) concentrically around the core limb (4), and
- a high-voltage primary winding (1) and an auxiliary operation secondary winding (3) are arranged in an outer layer (7) concentrically around the core limb (4) and the traction secondary winding (2), **characterized in that**
- the auxiliary operation secondary winding (3) comprises two electrically connected coils (3.1, 3.2, 3.3, 3.4), which enclose the high-voltage primary winding (1) in the axial direction (A).

2. Transformer according to Claim 1, wherein
- the high-voltage primary winding (1) comprises at least two electrically connected coils (1.1, 1.2), and
- the auxiliary operation secondary winding (3) comprises at least four electrically connected coils (3.1, 3.2, 3.3, 3.4), wherein
- in each case one coil (1.1, 1.2) of the high-voltage primary winding (1) is arranged in the axial direction A between in each case two coils (3.1 and 3.3 and 3.4 and 3.2) of the auxiliary operation secondary winding (3).

3. Transformer according to one of the preceding claims, wherein in each case at least two coils (2.1, 2.2) of the traction secondary winding (2), at least two coils (1.1, 1.2) of the high-voltage primary winding (1), and at least four coils (3.1, 3.2, 3.3, 3.4) of the auxiliary operation secondary winding (3) are arranged next to one another in the axial direction (A).

4. Transformer according to one of the preceding claims, wherein at least one inductor coil is connected in series with at least one coil (3.1, 3.2, 3.3, 3.4) of an auxiliary operation secondary winding (3).

## Revendications

1. Transformateur pour un véhicule à traction électrique, comprenant au moins un enroulement ( 1 ) primaire de haute tension, au moins un enroulement ( 2 ) secondaire de traction, ainsi qu'au moins un enroulement ( 3 ) secondaire de fonctionnement auxiliaire et une branche ( 4 ) de noyau conductrice magnétiquement, dans lequel
- un enroulement ( 2 ) secondaire de traction est disposé dans une couche ( 6 ) intérieure concentriquement à la branche ( 4 ) de noyau et
- un enroulement ( 1 ) primaire de haute tension et un enroulement ( 3 ) secondaire de fonctionnement auxiliaire sont disposés dans une couche ( 7 ) extérieure concentriquement à la branche ( 4 ) de noyau et à l'enroulement ( 2 ) secondaire de traction,
**caractérisé en ce que**
- l'enroulement ( 3 ) secondaire de fonctionnement auxiliaire comprend deux bobines ( 3.1, 3.2, 3.3, 3.4 ), qui sont reliées électriquement et qui enferment, dans la direction ( A ) axiale, l'enroulement ( 1 ) primaire de haute tension.

2. Transformateur suivant la revendication 1, dans lequel
- l'enroulement ( 1 ) primaire de haute tension comprend au moins deux bobines (1.1, 1.2) reliées électriquement et
- l'enroulement ( 3 ) secondaire de fonctionnement auxiliaire comprend au moins quatre bobines ( 3.1, 3.2, 3.3, 3.4 ) reliées électriquement,
dans lequel
- respectivement une bobine ( 1.1, 1.2 ) de l'enroulement ( 1 ) primaire de haute tension est disposée, dans la direction ( A ) axiale, entre respectivement deux bobines ( 3.1 et 3.3 ainsi que 3.4 et 3.2 ) de l'enroulement ( 3 ) secondaire de fonctionnement auxiliaire.

3. Transformateur suivant l'une des revendications précédentes, dans lequel respectivement au moins deux bobines ( 2.1, 2.2 ) de l'enroulement ( 2 ) secondaire de traction, au moins deux bobines ( 1.1, 1.2 ) de l'enroulement ( 1 ) primaire de haute tension et au moins quatre bobines ( 3.1, 3.2, 3.3, 3.4 ) de l'enroulement ( 3 ) secondaire de fonctionnement auxiliaire sont disposées les unes à côté des autres dans la direction ( A ) axiale.

4. Transformateur suivant l'une des revendications précédentes, dans lequel au moins une bobine d'inductance est montée en série avec au moins une bobine ( 3.1, 3.2, 3.3, 3.4 ) d'un enroulement ( 3 ) secondaire de fonctionnement auxiliaire.
